# EUROPÄISCHE PATENTSCHRIFT

(11) **EP 2 633 163 B1**
(45) Veröffentlichungstag und Bekanntmachung des Hinweises auf die Patenterteilung: **30.12.2015**
(21) Anmeldenummer: 11757876.5
(22) Anmeldetag: 20.09.2011
(51) Int. Cl.: F01N 3/20

(54) **TANKANORDNUNG UND ABGASNACHBEHANDLUNGSANORDNUNG**
TANK ARRANGEMENT AND EXHAUST GAS TREATMENT ARRANGEMENT
SYSTÈME DE RÉSERVOIR ET SYSTÈME DE POST-TRAITEMENT DE GAZ D'ÉCHAPPEMENT

(30) Priorität: 27.10.2010 DE 102010042985
(43) Veröffentlichungstag der Anmeldung: 04.09.2013
(73) Patentinhaber: Robert Bosch GmbH, 70442 Stuttgart (DE)
(72) Erfinder: HAEBERER, Rainer, 75015 Bretten (DE); HEITER, Tobias, 76227 Karlsruhe (DE)
(86) Internationale Anmeldenummer: PCT/EP2011/066298
(87) Internationale Veröffentlichungsnummer: WO 2012/055637

(56) Entgegenhaltungen:
- EP-A2- 1 647 324
- CN-Y- 2 487 998
- DE-A1-102008 015 599
- JP-A- 9 122 635

## Beschreibung

### Stand der Technik

Die Erfindung geht aus von einer Tankanordnung bzw. einer Abgasnachbehandlungsanordnung nach der Gattung der unabhängigen Ansprüche.

Bei Kraftwagen mit Verbrennungsmotor muss aufgrund der in den nächsten Jahren anstehenden verschärften Absatzgesetzgebung unter anderem das Schadstoff Stickstoffoxid reduziert werden. Eine Methode, die hierbei zur Anwendung kommt, ist das Verfahren der selektiven katalytischen Reduktion, bei dem das Schadstoff Stickstoffoxid unter Zuhilfenahme von flüssigem Reduktionsmittel zu Stickstoff und Wasser reduziert wird. Das Reduktionsmittel wird in einer Leitung vom Tank zum Dosiermodul gefördert. Das heute eingesetzte Reduktionsmittel, eine wässrige Harnstofflösung, gefriert bei -11 °C.

Aus der DE 10 2006 027 487 ist es bekannt, wässrige Harnstofflösung in einem Tank aufzubewahren, in dessen Innenraum sich eine elektrische Heizung befindet, welche dazu geeignet ist, etwaig gefrorenes Reduktionsmittel aufzutauen. Diese elektrische Heizung weist Elemente mit positiven Temperaturkoeffizienten auf, sogenannte PTC-Elemente ("PTC" steht für den englischen Ausdruck "Positive Temperature Coefficient").

Ein Wassererwärmer mit elektromagnetischer Heizung ist aus der Druckschrift CN 2 487 998 Y bekannt.

### Offenbarung der Erfindung

Die erfindungsgemäße Tankordnung bzw. die erfindungsgemäße Abgasnachbehandlungsanordnung haben demgegenüber den Vorteil, dass innerhalb des Tanks ein Heizelement Verwendung findet, das einfach und dennoch robust bzw. beständig gegenüber der wässrigen Harnstofflösung ausgestaltet werden kann. Es ist nicht mehr erforderlich, Heizelemente mit einer Schutzschicht aus Kunststoff zu umspritzen, die das Auftauverhalten negativ beeinflussen könnte. Es ist auch nicht mehr erforderlich, eine der Beheizungsanordnung zugeordnete elektrische Ansteuerung durch zusätzliche Maßnahmen gegen das korrosiv wirkende AdBlue, also der wässrigen Harnstofflösung, zu schützen. Insbesondere ist es nicht mehr erforderlich, eine elektrische Kontaktierung der Heizungsanordnung mit einer Elastomerabdichtung vor korrosiven Einwirkungen zu schützen. Kunststoffummantelungen und Elastomerabdichtungen begrenzen in einer AdBlue-Umgebung aufgrund ihres Alterungsverhaltens die routinemäßig einsetzbaren Heizraten, um die Heizanordnung nicht vorschnell altern zu lassen. Eine Induktionsheizung, also eine induktive Erwärmung eines metallisch leitfähigen Körpers innerhalb des Tanks über ein wechselndes Magnetfeld, ist in vorteilhafter Weise frei von solchen Begrenzungen.

Weitere Vorteile ergeben sich durch die in den abhängigen Ansprüchen genannten Merkmale.

Befindet sich die Heizung nahe eisdruckempfindlicher Komponenten bzw. nahe solcher Komponenten, die bei tiefen Außentemperaturen bei Inbetriebnahme der Brennkraftmaschine rasch aufgetaut werden sollen, um eine baldige Funktionstüchtigkeit der Abgasnachbehandlungsanordnung bzw. der Tankanordnung zu gewährleisten, so wird in vorteilhafter Weise eine robust und zuverlässig arbeitende Tank- bzw. Abgasnachbehandlungsanordnung bereitgestellt.

Weitere Vorteile ergeben sich durch die in den weiteren abhängigen Ansprüchen und in der Beschreibung genannten Merkmale.

### Kurze Beschreibung der Zeichnungen

Ausführungsbeispiele der Erfindung sind in der Zeichnung dargestellt und in der nachfolgenden Beschreibung näher erläutert.

Es zeigen
Figur 1
   eine Tankanordnung,
Figur 2
   eine Abgasnachbehandlungsanordnung mit einer weiteren Tankanordnung,
Figur 3
   ein Heizelement und
Figur 4
   eine Elektronikanordnung zum Betreiben der Heizanordnung.

### Ausführungsformen der Erfindung

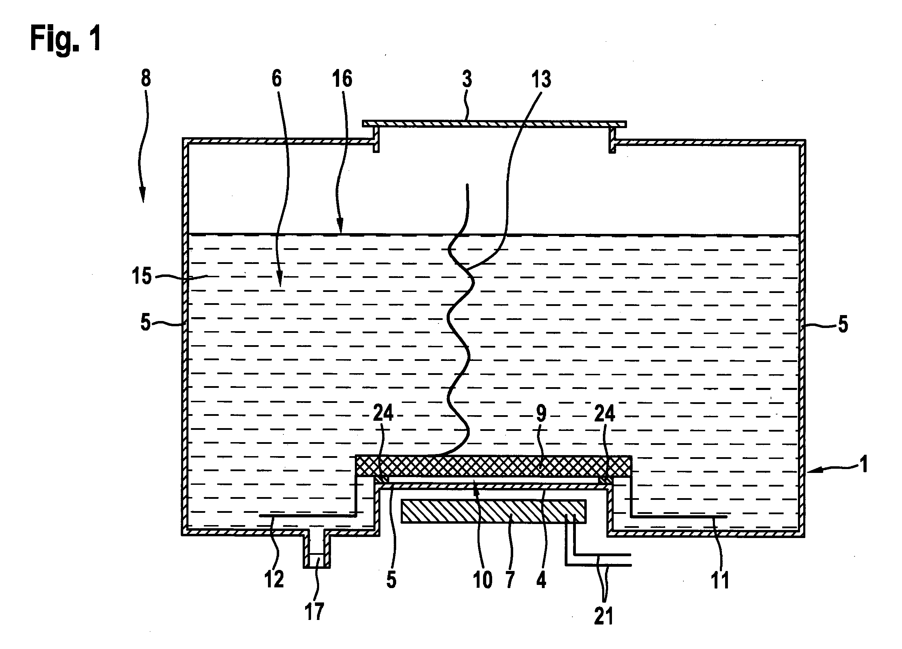

Figur 1 zeigt eine Tankanordnung 1 mit einer Tankwand 5, einem Tankboden 4 und einem Tankdeckel 3. Der von den Bestandteilen 3 bis 5 umschlossene Innenraum 6 kann durch Abnehmen des Deckels 3 mit AdBlue 15 befüllt werden. Im Innenraum 6 befindet sich nahe des Tankbodens 4 ein als Heizelement dienender Metallkörper 9, welcher über eine Befestigungsanordnung 24 mit dem Tankboden 4 verbunden ist. Am Metallkörper 9 wiederum ist ein metallischer Arm 13 befestigt, der nach oben in Richtung Tankdeckel 3 ragt. Dieser ist so lang, dass er auch bei voll gefülltem Tank 1 mit seinem oberen Ende aus der Flüssigkeit herausragt. Des Weiteren sind mit Metallkörper 9 nach außen verlaufende metallische Arme 11 und 12 befestigt, die sich, beabstandet zum Tankboden 5, entlang des Tankbodens erstrecken. Ein im Tankboden eingebrachter Abfluss 17 befindet sich dabei in unmittelbarer Nähe des metallischen Arms 12. Die Heizanordnung 10 der Tankordnung 1 umfasst neben dem Metallkörper 9 eine Magnetisierungsspule 7 mit elektrischen Anschlüssen 21. Die durch die Magnetisierungsspule 7 und die elektrischen Anschlüsse 21 gebildete Magnetisierungseinheit befindet sich im Außenraum 8, also außerhalb des Tanks, jedoch dem Metallkörper 9 benachbart und durch den Tankboden 4 vom Metallkörper 9 getrennt. Der Tankboden 4 bildet im Bereich der Heizanordnung 10 eine flache Einbuchtung, die den befüllbaren Innenraum des Tanks etwas verkleinert, jedoch im Außenraum eine Nische bzw. Platz bietet zur Unterbringung der Magnetisierungseinheit 7, 21.

Die flache Magnetisierungsspule 7 dient zur induktiven Anregung des AdBlueresistenten Metallkörpers 9 im Innenraum 6 des Tanks. Dies geschieht beispielsweise durch eine rechteckförmige Bestromung der Magnetisierungsspule 7 mit einer Spannung von 15 Volt, so dass der Metallkörper durch die induzierten Wirbelströme erwärmt wird. Der aus Kunststoff bestehende Tankboden 4 erfährt hingegen durch das magnetische Wechselfeld keine Erwärmung. Die Metallarme 11, 12 und 13 führen die durch die induzierten Wirbelströme produzierte Wärme in äußere bzw. obere Bereiche des Tanks. Der beispielsweise wellen- bzw. sinusförmig ausgebildete Metallarm 13 dient zum Auftauen eines Entlüftungspfads in den Luftraum des Tanks, so dass bei tankbodenseitiger Entnahme von Reduktionsmittel über den Abfluss 17 über den im Bereich des Metallarms 13 gebildeten Entlüftungspfads Luft nachströmen und sich somit im Bereich des Abflusses 17 kein Unterdruck ausbilden kann, der einer weiteren Entnahme von Flüssigkeit aus dem Tank entgegenwirken würde. Ein Nachschub an Luft in den Tank hinein ist durch eine nicht näher dargestellte Entlüftungsöffnung im Tankdeckel 3 bzw. in einer Tankwand 5 oberhalb des Flüssigkeitspegels 16 gewährleistet.

In einer abgewandelten Ausführungsform kann der Metallkörper 9 mit einem Filter kombiniert werden, über den Reduktionsmittel fließen muss, bevor es über den Abfluss 17 entnommen wird. Somit ist gewährleistet, dass das Filter aufgetaut wird. In einer weiteren alternativen Ausführungsform, kann alternativ oder in Kombination hierzu der Metallkörper 9 auch so ausgeführt sein, dass sich bei nahezu leerem Tank durch das Schwappen bei Fahrzeugbewegungen innerhalb des Metallkörpers 9 Flüssigkeit ansammelt, die zunächst aufgetaut und sofort nach Inbetriebnahme der Brennkraftmaschine bzw. der Abgasnachbehandlungsanordnung abgesaugt werden kann.

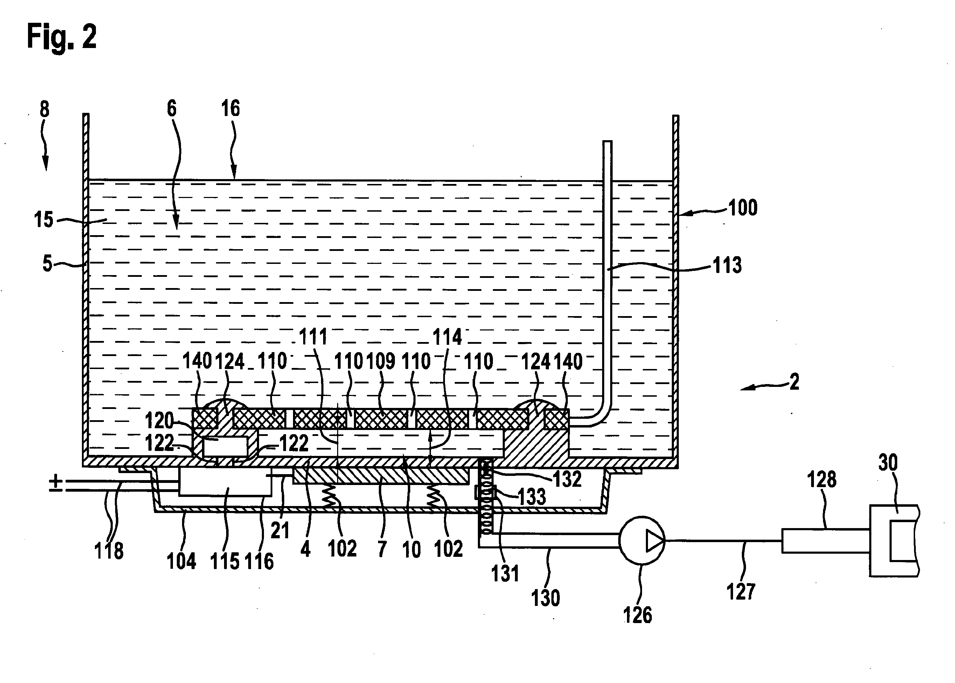

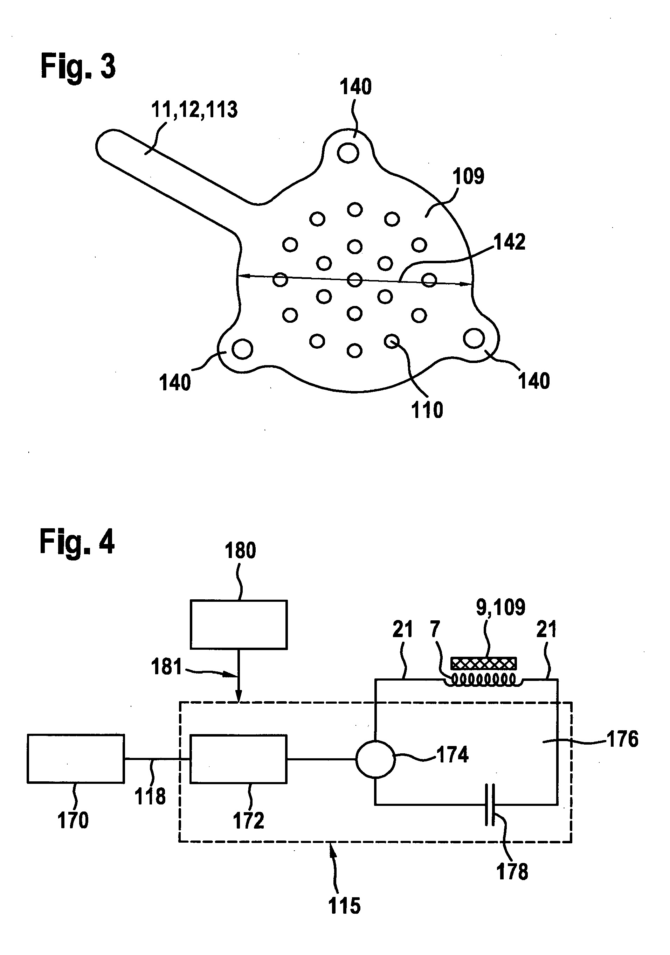

Figur 2 zeigt einen weiteren Tank 100, bei dem im Vergleich zur Tankanordnung 1 gemäß Figur 1 im Innenraum 6 ein Metallkörper 109 mit darin eingebrachten Löchern 110 angeordnet ist. Die Tankanordnung 100 ist Bestandteil einer Abgasnachbehandlungsanordnung 2, in deren Abgasleitung 30 über ein Dosierventil 128 im Tank bevorratetes AdBlue 15 einbringbar ist. Hierzu ist nahe der Magnetisierungsspule 7 im Bereich des Tankbodens eine Absaugleitung, eine sogenannte Sauglanze 130, angebracht, über die mittels einer Pumpe 126 AdBlue 15 aus dem Tank abgesaugt und über eine Leitung 127 dem Dosierventil 128 zugeführt werden kann. Im Bereich der Absaugleitung durchströmt die Flüssigkeit 15 ein Filter 131. Eine Absaugleitung 130 enthält im Innern ein metallisches Element 132 und wahlweise eine ebenfalls in Figur 2 abgebildete Metallspirale 133. Auch das Filter 131 kann ein nicht näher dargestelltes metallisches Element enthalten. Der Metallkörper 109 ist über Befestigungsaugen 140 (siehe hierzu auch Figur 3) mittels Befestigungsanordnungen 124, die beispielsweise einstückig mit dem Tankboden 4 ausgeführt sind, im Bereich des Tankbodens befestigt. Der als Platte ausgeführte Metallkörper 109 weist einen Abstand 111 zum Tankboden 4 auf, der vorzugsweise kleiner als 5mm ist. Hierdurch ist eine gute induktive Erwärmung der Platte durch die Magnetisierungsspule 7 gewährleistet, und die Durchbrüche bzw. Löcher 110 ermöglichen einen Wärmeaustausch zwischen Bereichen des Innenraums 6 ober- und unterhalb der Platte 109; des Weiteren kann warme Flüssigkeit durch die Durchbrüche in der Platte nach oben steigen. Die Magnetisierungsspule 7 ist über elektrische Anschlüsse 21 mit einer Elektronikanordnung 115 verbunden, welche über einen Energieversorgungsanschluss 118 mit dem elektrischen Bordnetz des Kraftfahrzeugs in Verbindung steht. Sowohl die Elektronikanordnung 115 als auch die Magnetisierungsspule 7 sowie der Bereich der Sauglanze 130 nahe des Tankbodens 4 inklusive des Filters 131 sind von einem Moduldeckel 104 umgeben, der unterhalb des Tankbodens 4 im Außenraum 8 angeordnet und am Tankboden 4 befestigt ist. Die Magnetisierungsspule 107 ist in ihrem Abstand 114 zur Platte 109 mittels gegen den Moduldeckel 104 gespannter Federn 102 positioniert. Der Moduldeckel 104 bzw. das Gehäuse 116 der Elektronikanordnung 115 können wahlweise so ausgeführt sein, dass sie die Elektronikanordnung 115 bzw. die Umgebung außerhalb des Tanks vor störender elektromagnetischer Strahlung schützen. Zur temperaturabhängigen Ansteuerung der Heizanordnung ist die Elektronikanordnung 115 mit einem Temperaturfühler 120 über Anschlüsse 122 elektrisch verbunden. Die elektrischen Anschlüsse 122 sind durch den Tankboden 4 geführt und kontaktieren den vorzugsweise als bei Raumtemperatur sehr niederohmiges polymeres PTC-Element ausgeführten Temperaturfühler 120, der im Innern der Befestigungsanordnung 124 und damit nahe, aber elektrisch isoliert von dem Metallkörper 109 angeordnet ist.

Der Metallkörper 109 ist randständig mit einem metallischen Arm 113 versehen, der nach oben ragt derart, dass er auch bei vollem Tank den Flüssigkeitspegel 16 überragt.

Der Tankboden aus Kunststoff erfährt durch das magnetische Wechselfeld der Magnetisierungsspule 7, außer im Bereich der Plattenbefestigung am Tank, keine Erwärmung. Zum Schutz vor Überhitzung muss das Heizsystem abregelbar sein. Dies kann entweder über einen separaten Temperatursensor in der Nähe der Heizung oder, wie in Figur 2 dargestellt, über das PTC-Element (polymeres PTC-Element 120) erfolgen, welches mit dem Heizelement über die Elektronikanordnung 115 in Reihe geschaltet ist. Das PTC-Element ist bei Raumtemperatur ein sehr niederohmiges polymeres PTC-Element, das nicht zum Heizen dient, sondern nur zur Temperaturbegrenzung. PTC-Elemente werden beispielsweise unter den Handelsbezeichnungen "PolySwitch" oder "Multifuse" vertrieben. Dieses PTC-Element 120 ist im beschriebenen Ausführungsbeispiel in der Auflage der Metallplatte 109 auf dem Tankboden im Kunststoff der Befestigungsanordnung 124 der Tankwand positioniert. Somit kann es auf Grundlage der Widerstandsänderung die Anregung der Magnetisierungsspule 7 verändern. Die Eigenfrequenz des nachfolgend noch näher beschriebenen, durch die Zusammenschaltung der Elektronikanordnung 115 mit der Metallplatte 109 gebildeten Schwingkreises hängt vom Abstand des Metallkörpers 109 zur Magnetisierungsspule 7 ab. Dieser Abstand sollte 15mm nicht überschreiten. Überdies sollte der Abstand bei allen gefertigten Teilen gleich sein, so dass immer in Resonanz angeregt werden kann. Alternativ zur abstandsgenauen Positionierung der schwingkreisrelevanten Bauteile kann in der Elektronikanordnung 115 eine Frequenznachführung der Eigenfrequenz des Schwingkreises implementiert sein. Zur genauen Positionierung der Magnetisierungsspule relativ zum Metallkörper 109 dienen die Federn 102, welche die Spule fest gegen den Tankboden drücken und damit einen definierten Abstand der Spule zur Metallplatte einstellen. Die in der Nähe der Magnetisierungsspule 7 angeordnete Sauglanze 130 sowie das Filter 131 werden ebenfalls über das Induktionsprinzip mittels in diesen Komponenten enthaltener metallischer Elemente aufgetaut.

Alternativ zu einer flachen Ausführung der Magnetisierungsspule 7, die dazu dient, dass die Magnetisierungsspule 7 optimal mit dem Metallkörper 109 in Form einer Metallplatte induktiv gekoppelt ist, kann in einer auch hinsichtlich des Bauraums weniger vorteilhaften Weise alternativ eine spiralförmige Spule verwendet werden, in die ein magnetischer Kern eintaucht.

Alternativ oder in Kombination zu hinsichtlich der elektromagnetischen Verträglichkeit optimierten Ausführungsformen des Gehäuses 116 und/oder des Moduldeckels 104, können auch weitere Maßnahmen zur Abschirmung des Außenraums gegen von der Magnetisierungsspule 7 stammender elektromagnetischer Strahlung, wahlweise zusätzlich, vorgesehen werden.

Figur 3 zeigt einen als Heizelement 109 verwendeten Metallkörper in Form einer Metallplatte in Draufsicht. Der Durchmesser 142 der kreisrunden Ausführungsform ist kleiner als 12cm. Die Wandstärke der Platte liegt vorzugsweise in einem Bereich zwischen 0,3 Millimeter und 1 Millimeter und beträgt in der Ausführungsform gemäß Figur 3 beispielsweise 1 Millimeter. Die Metallplatte ist dabei etwas größer als die laterale Erstreckung der Spule. An ihrem Außenrand besitzt die Platte mehrere Befestigungsaugen 140, die über die an sich kreisrunde Form überstehen und anhand derer die Metallplatte über die Befestigungsanordnungen 124 am Tankboden befestigt wird. Die Befestigungsaugen sitzen damit etwas außerhalb des Induktionsbereichs der Magnetspule 7. Somit werden die Befestigungsaugen im Wesentlichen nur durch Wärmeübertragung und nicht durch Induktion erwärmt, daher erfährt der temperaturempfindliche Tankwerkstoff - hierzu wird insbesondere HDPE verwendet ("HDPE" steht für den englischen Ausdruck "High Density Polyethylen") - auch nur eine moderate Erwärmung. Wie bereits in Figur 2 dargestellt, ist die Platte 109 durch Warmverdrücken der als Kunststoffzapfen ausgebildeten Befestigungsanordnungen 124 am Tankboden fixiert. Die Metallplatte 109 ist in den Ausführungsbeispielen gemäß Figur 1 und 2 aus AdBlue resistentem metallischem Werkstoff hergestellt. Diese Lösung hat den Nachteil, dass AdBlue-resistente Stähle üblicherweise Stähle sind, die nur begrenzte magnetische Eigenschaften haben. Alternativ kann ein magnetisch guter Baustahl verwendet werden, der allerdings galvanisch verchromt oder in einen AdBlue-dichten Kunststoff, z. B. POM ("POM" steht für die Stoffbezeichnung "Polyoxymethylen"), eingespritzt werden muss. Die Umspritzung verschlechtert jedoch den Wärmeübergang von der Metallplatte an die sie umgebende Flüssigkeit. Somit ist in dem Fall, dass ein Material mit magnetisch guten Eigenschaften gewünscht ist, eine galvanische Beschichtung die vorzuziehende Bearbeitungsweise für eine Metallplatte 109 als Heizelement der Heizanordnung 10.

Figur 4 zeigt das Innenleben der Elektronikanordnung 115. Diese umfasst einen über den Energieversorgungsanschluss 118 mit der Fahrzeugbatterie 170 verbundenen Verstärker 172, der einen Wechselstromgenerator 174 speist, der mit einem Schwingkreis 176 verschaltet ist. Der Schwingkreis 176 wird durch einen Kondensator 178 der Elektronikanordnung 115 und die Magnetisierungsspule 7, die mit dem Heizelement 9 bzw. 109 induktiv gekoppelt ist, gebildet. Ein Steuergerät 180 der Abgasnachbehandlungsanordnung bzw. ein Motorsteuergerät des Kraftfahrzeugs, welches die Ansteuerung bzw. Regelung der Abgasnachbehandlungsanordnung übernimmt, dient zur Ansteuerung 181 auch der Heizanordnung 10 der Tankanordnung 1 bzw. 100 durch entsprechende Einstellung der in den Schwingkreis 176 einzukoppelnden, vom Kraftfahrzeugbordnetz stammenden Energie.

Wird dieser Schwingkreis 176 über den Wechselstromgenerator 174 durch ein sinus- oder rechteckförmiges Signal in der Eigenfrequenz des Schwingkreises angeregt, so kommt es in Folge von Wirbelströmen zu einer starken Erwärmung der sich im Innenraum 6 des Tanks befindlichen Metallplatte 9 bzw. 109. Aufgrund der bordnetzseitigen Begrenzung der Spannung auf 12 Volt erfolgt ein Hochsetzen der elektrischen Spannung zur Versorgung des Wechselstromgenerators 174 über den genannten Verstärker 172.

## Patentansprüche

1. Tankanordnung (1, 100) zur Aufbewahrung eines Fluids (15), insbesondere eines flüssigen Reduktionsmittels zur Entstickung des Abgases einer Brennkraftmaschine, mit einer Tankwand (4, 5), wobei die Tankwand (5) einen mit dem Fluid (15) befüllbaren Innenraum (6) der Tankanordnung von einem Außenraum (8) abgrenzt, und mit einer Heizanordnung (10) zum Erwärmen des Fluids, wobei die Heizanordnung ein im Innenraum angeordnetes Heizelement (9, 109) umfasst, **dadurch gekennzeichnet, dass** die Heizanordnung (10) eingerichtet ist zum induktiven Erwärmen des Heizelements (9, 109), wobei im Außenraum (8), dem Heizelement (9, 109) benachbart, eine elektrisch ansteuerbare Magnetisierungseinheit (7, 21; 7, 21, 115, 118) der Heizanordnung (10) angeordnet ist, und dass die Tankwand aus elektrisch nicht oder nur unwesentlich leitendem Kunststoff hergestellt ist, so dass eine induktive Beheizung des Fluids (15) im Wesentlichen über das Heizelement (9) erfolgen kann, wobei sich die Heizanordnung (10) nahe einer Absaugstelle (17, 130) und/oder eines Filters (131) der Tankanordnung befindet, und wobei die Absaugstelle beziehungsweise das Filter mindestens ein metallisches Element (132) aufweisen, so dass eine induktive Beheizung der Absaugstelle (17, 130) beziehungsweise des Filters (131) erfolgen kann.

2. Tankanordnung nach Anspruch 1, **dadurch gekennzeichnet, dass** sich die Heizanordnung im Bereich eines Tankbodens (4) der Tankanordnung befindet.

3. Tankanordnung nach Anspruch 2, **dadurch gekennzeichnet, dass** die Metallplatte mindestens einen Durchbruch (110) und/oder mindestens eine metallische Zunge (11, 12, 13, 113) aufweist.

4. Tankanordnung nach einem der vorhergehenden Ansprüche, **dadurch gekennzeichnet, dass** das Heizelement (9) einen elektrisch gut leitfähigen Körper, beispielsweise einen Metallkörper, insbesondere eine Metallplatte, vorzugsweise mit einem Durchmesser kleiner als 12 Zentimeter und vorzugsweise mit einer Dicke zwischen zirka 0,3 und zirka 1 Millimeter, umfasst.

5. Tankanordnung nach Anspruch 4, **dadurch gekennzeichnet, dass** die Metallplatte mindestens ein mit einer Befestigungsanordnung (24, 124) verbundenes Befestigungsauge (140) aufweist, welches sich m Wesentlichen außerhalb eines durch die Magnetisierungseinheit induktiv beeinflussten Bereichs befindet.

6. Tankanordnung nach einem der vorhergehenden Ansprüche, **dadurch gekennzeichnet, dass** der Abstand (11) des Heizelements (9, 109) von der Tankwand (4, 5) kleiner als 1 Zentimeter, vorzugsweise kleiner als 5 Millimeter, ist.

7. Tankanordnung nach einem der vorhergehenden Ansprüche, **dadurch gekennzeichnet, dass** der Abstand (114) des Heizelements (9, 109) von der Magnetisierungseinheit (7, 21; 7, 21, 115, 118) nicht größer als 2 Zentimeter, vorzugsweise nicht größer als 1,5 Zentimeter, ist.

8. Tankanordnung nach einem der vorhergehenden Ansprüche, **dadurch gekennzeichnet, dass** zumindest eine Magnetisierungsspule (7) der Magnetisierungseinheit (7, 21; 7, 21, 115, 118) mittels mindestens einer Feder (4) gegen die Tankwand (4, 5) gedrückt ist.

9. Tankanordnung nach einem der vorhergehenden Ansprüche, **dadurch gekennzeichnet, dass** die Magnetisierungseinheit mit mindestens einem temperaturabhängigen Element mit positivem Temperaturkoeffizienten, insbesondere einem PTC-Element, verschaltet ist.

10. Tankanordnung nach Anspruch 9, **dadurch gekennzeichnet, dass** das temperaturabhängige Element bei Raumtemperatur sehr niederohmig ist.

11. Abgasnachbehandlungsanordnung (2) einer Brennkraftmaschine mit einer Abgasleitung (30) zur Abführung der von der Brennkraftmaschine stammenden Abgase in die Umgebungsluft, bei der ein Fluid zur Abgasnachbehandlung in die Abgasleitung eingespritzt wird, wobei das Fluid mittels einer Pumpe aus einer Tankanordnung, nach einem der vorhergehenden Ansprüche abgesaugt wird.

## Claims

1. Tank arrangement (1, 100) for storing a fluid (15), in particular a liquid reducing agent for the denitrification of the exhaust gas of an internal combustion engine, having a tank wall (4, 5), wherein the tank wall (5) delimits an interior space (6), which can be filled with the fluid (15), of the tank arrangement from an exterior space (8), and having a heating arrangement (10) for heating the fluid, wherein the heating arrangement comprises a heating element (9, 109) arranged in the interior space, **characterized in that** the heating arrangement (10) is designed to inductively heat the heating element (9, 109), wherein an electrically actuable magnetization unit (7, 21; 7, 21, 115, 118) of the heating arrangement (10) is arranged in the exterior space (8) adjacent to the heating element (9, 109), and **in that** the tank wall is produced from electrically non-conductive or only insignificantly conductive plastic, such that inductive heating of the fluid (15) can be performed substantially by way of the heating element (9), wherein the heating arrangement (10) is situated close to a suction extraction point (17, 130) and/or to a filter (131) of the tank arrangement, and wherein the suction extraction point and/or the filter have/has at least one metallic element (132), such that inductive heating of the suction extraction point (17, 130) and/or of the filter (131) is possible.

2. Tank arrangement according to Claim 1, **characterized in that** the heating arrangement is situated in the region of a tank base (4) of the tank arrangement.

3. Tank arrangement according to Claim 2, **characterized in that** the metal plate has at least one aperture (110) and/or at least one metallic tongue (11, 12, 13, 113).

4. Tank arrangement according to one of the preceding claims, **characterized in that** the heating element (9) comprises a body with good electrical conductivity, for example a metal body, in particular a metal plate, preferably with a diameter of less than 12 centimetres and preferably with a thickness of between approximately 0.3 millimetres and approximately 1 millimetre.

5. Tank arrangement according to Claim 4, **characterized in that** the metal plate has at least one fastening lug (140) which is connected to a fastening arrangement (24, 124) and which is situated substantially outside a region that is inductively influenced by the magnetization unit.

6. Tank arrangement according to one of the preceding claims, **characterized in that** the spacing (11) of the heating element (9, 109) from the tank wall (4, 5) is less than 1 centimetre, preferably less than 5 millimetres.

7. Tank arrangement according to one of the preceding claims, **characterized in that** the spacing (114) of the heating element (9, 109) from the magnetization unit (7, 21; 7, 21, 115, 118) is no greater than 2 centimetres, preferably no greater than 1.5 centimetres.

8. Tank arrangement according to one of the preceding claims, **characterized in that** at least one magnetization coil (7) of the magnetization unit (7, 21; 7, 21, 115, 118) is pressed against the tank wall (4, 5) by way of at least one spring (4).

9. Tank arrangement according to one of the preceding claims, **characterized in that** the magnetization unit is connected to at least one temperature-dependent element with positive temperature coefficient, in particular a PTC element.

10. Tank arrangement according to Claim 9, **characterized in that** the temperature-dependent element exhibits very low resistance at room temperature.

11. Exhaust-gas aftertreatment arrangement (2) of an internal combustion engine, having an exhaust line (30) for discharging the exhaust gases produced by the internal combustion engine into the surrounding air, wherein a fluid for exhaust-gas aftertreatment is injected into the exhaust line, wherein the fluid is extracted by suction from a tank arrangement according to one of the preceding claims by means of a pump.

## Revendications

1. Système de réservoir (1, 100) pour stocker un fluide (15), en particulier un agent réducteur fluide pour la dénitration du gaz d'échappement d'un moteur à combustion interne, comprenant une paroi de réservoir (4, 5), la paroi de réservoir (5) délimitant un espace interne (6) du système de réservoir pouvant être rempli avec le fluide (15) par rapport à un espace externe (8), et comprenant un système de chauffage (10) pour chauffer le fluide, le système de chauffage comprenant un élément chauffant (9, 109) disposé dans l'espace interne, **caractérisé en ce que** le système de chauffage (10) est prévu pour chauffer par induction l'élément chauffant (9, 109), une unité d'aimantation du système de chauffage (10), pouvant être commandée électriquement (7, 21 ; 7, 21, 115, 118), étant disposée dans l'espace externe (8) en position adjacente à l'élément chauffant (9, 109), et la paroi du réservoir étant fabriquée en plastique non conducteur ou pratiquement non conducteur de l'électricité, de sorte qu'un chauffage par induction du fluide (15) puisse s'effectuer essentiellement par le biais de l'élément chauffant (9), le système de chauffage (10) se trouvant à proximité d'un point de prélèvement (17, 130) et/ou d'un filtre (131) du système de réservoir, et le point de prélèvement ou le filtre présentant au moins un élément métallique (132) de telle sorte qu'un chauffage par induction du point de prélèvement (17, 130) respectivement du filtre (131) puisse avoir lieu.

2. Système de réservoir selon la revendication 1, **caractérisé en ce que** le système de chauffage se trouve dans la région d'un fond de réservoir (4) du système de réservoir.

3. Système de réservoir selon la revendication 2, **caractérisé en ce que** la plaque métallique présente au moins un orifice (110) et/ou au moins une langue métallique (11, 12, 13, 113).

4. Système de réservoir selon l'une quelconque des revendications précédentes, **caractérisé en ce que** l'élément chauffant (9) comprend un corps bon conducteur de l'électricité, par exemple un corps métallique, en particulier une plaque métallique, de préférence ayant un diamètre inférieur à 12 cm et de préférence une épaisseur comprise entre environ 0,3 et environ 1 millimètre.

5. Système de réservoir selon la revendication 4, **caractérisé en ce que** la plaque métallique présente au moins un oeillet de fixation (140) connecté à un système de fixation (24, 124), qui se trouve essentiellement à l'extérieur d'une région influencée de manière inductive par l'unité d'aimantation.

6. Système de réservoir selon l'une quelconque des revendications précédentes, **caractérisé en ce que** la distance (11) de l'élément chauffant (9, 109) à la paroi du réservoir (4, 5) est inférieure à 1 cm, de préférence inférieure à 5 mm.

7. Système de réservoir selon l'une quelconque des revendications précédentes, **caractérisé en ce que** la distance (114) de l'élément chauffant (9, 109) à l'unité d'aimantation (7, 21 ; 7, 21, 115, 118) ne dépasse pas 2 cm, de préférence ne dépasse pas 1,5 cm.

8. Système de réservoir selon l'une quelconque des revendications précédentes, **caractérisé en ce qu'**au moins une bobine d'aimantation (7) de l'unité d'aimantation (7, 21 ; 7, 21, 115, 118) est pressée contre la paroi du réservoir (4, 5) au moyen d'au moins un ressort (4).

9. Système de réservoir selon l'une quelconque des revendications précédentes, **caractérisé en ce que** l'unité d'aimantation est mise en circuit avec un élément dépendant de la température avec un coefficient de température positif, en particulier un élément PTC.

10. Système de réservoir selon la revendication 9, **caractérisé en ce que** l'élément dépendant de la température est très faiblement ohmique à température ambiante.

11. Système de post-traitement de gaz d'échappement (2) d'un moteur à combustion interne comprenant une conduite de gaz d'échappement (30) pour l'évacuation des gaz d'échappement provenant du moteur à combustion interne dans l'air environnant, dans lequel un fluide est injecté dans la conduite de gaz d'échappement pour le post-traitement des gaz d'échappement, le fluide étant prélevé au moyen d'une pompe hors d'un système de réservoir selon l'une quelconque des revendications précédentes.
